# EUROPÄISCHE PATENTSCHRIFT

(11) **EP 0 684 673 B1**
(45) Veröffentlichungstag und Bekanntmachung des Hinweises auf die Patenterteilung: **13.05.1998**
(21) Anmeldenummer: 95105422.0
(22) Anmeldetag: 11.04.1995
(51) Int. Cl.: H02B 13/02, H01H 3/26

(54) **Schaltfeld mit einem innerhalb eines Schaltschrankes angeordneten dreipoligen Leistungsschalters**
Switchboard with a three phase power circuit breaker located within a switch cabinet
Tableau de distribution avec un commutateur de puissance triphasé disposé à l'intérieur d'une armoire de commutation

(30) Priorität: 18.04.1994 DE 4412785; 31.03.1995 DE 19511736
(43) Veröffentlichungstag der Anmeldung: 29.11.1995
(73) Patentinhaber: ABB PATENT GmbH, 68309 Mannheim (DE)
(72) Erfinder: Guss, Michael, D-42781 Haan (DE); Seidelmann, Wolfgang, D-40882 Ratingen (DE)
(74) Vertreter: Rupprecht, Klaus, Dipl.-Ing.

(56) Entgegenhaltungen:
- DE-A- 3 436 173
- DE-C- 693 995
- FR-A- 2 027 697
- US-A- 2 914 707
- US-A- 3 132 289
- US-A- 4 804 809

## Beschreibung

Die Erfindung betrifft ein Schaltfeld gemäß dem Oberbegriff des Anspruches 1.

Ein derartiges Schaltfeld ist beispielsweise in der DE 34 36 173 Al und teilweise auch in der gleichzeitig mit eingereichten Patentanmeldung P 44 12 784.7 beschrieben.

An einer Frontwand ist jeweils ein Isoliergehäuse für jeweils einen Leistungsschalterpol, die zusammen einen dreipoligen Leistungsschalter bilden, befestigt, wobei die Stirnseite des Isoliergehäuses nach vorne gerichtet ist. Innerhalb der Frontwand ist eine Öffnung vorgesehen, durch die der Leistungsschalterpol nach vorne herausgezogen werden kann.

Auf der Außenfläche des Isoliergehäuses ist ein Lagerbock vorgesehen, auf dem ein Trennmesser gelagert ist, dessen Schwenkachse senkrecht zur Mittelachse des Isoliergehäuses verläuft und in der durch die Mittelachse des Leistungsschalterpols bzw. des Isoliergehäuses bestimmten vertikalen Ebene liegt.

Der Antrieb dieser Anordnung erfolgt mittels eines Schwenkhebels.

Aufgabe der Erfindung ist es, eine weitere Antriebsvorrichtung für ein Schwenkmesser zu schaffen, welches in der Handhabung und der Montage vereinfacht ist.

Diese Aufgabe wird erfindungsgemäß gelöst durch die kennzeichnenden Merkmale des Anspruches 1.

Erfindungsgemäß ist an der Frontplatte pro Pol je eine Gewindespindel gelagert, die parallel zu der Mittelachse des Isoliergehäuses verläuft und über eine Gleitmutter mit dem Messer gekuppelt ist. Die Gewindespindel ragt aus der Frontwand heraus und ist dort mit einem Antriebsmotor gekuppelt, so daß die Gewindespindel und damit das Trennmesser elektrisch angetrieben werden kann.

Das Messer schwenkt zwischen zwei festen Kontaktstücken hin und her, von denen das eine an zu Sammelschienen führenden Verbindungsleitern und das andere an der Frontwand befestigt ist, welch letzteres dadurch geerdet wird.

Die Gleitmutter ist bezogen auf die Längsachse des Messers an diesem fixiert und die Gewindespindel innerhalb der Frontwand wenigstens um eine parallel zur Schwenkachse des Messers und senkrecht zur Gewindespindel verlaufende Achse schwenkbar, so daß die von der Gewindemutter beim Betätigen des Messers durchgeführte Kreisbewegung ausgeglichen werden kann.

Zur druckdichten Führung und Lagerung der Gewindespindel an der Frontplatte ist gemäß Anspruch 3 eine Faltenbalganordnung vorgesehen. Der Faltenbalg kann dabei auch eine Schwenkbewegung der Gewindespindel gestatten.

Eine weitere, besonders vorteilhafte Möglichkeit, eine solche druckdichte Lagerung zu erreichen, kann gemäß dem Anspruch 4 darin bestehen, daß an der Frontplatte in bevorzugter Weise eine Kugellageranordnung vorgesehen ist.

Die Ausgestaltung dieser Kugellageranordnung ist den Ansprüchen 5 bis 7 zu entnehmen.

Der Antrieb der drei nebeneinanderliegenden Gewindespindeln kann gemäß den Ansprüchen 8 bis 10 in bevorzugter Weise mittels einer Kettenantriebsanordnung vorgenommen werden, wobei die einzelnen Gewindespindeln mit Zahnrädern drehfest gekoppelt sind, um die Ketten herumgeschlungen sind. In bevorzugter Weise ist zwischen zwei der Gewindespindeln ein Ritzel an der Frontplatte gelagert, an dem der elektrische Antrieb oder die Antriebsvorrichtung angeschlossen ist.

Zur Kontaktierung des beweglichen Kontaktstückes mit dem Trennmesser ist ein Lagerbock vorgesehen, der das Gehäuse in radialer Richtung durchgreift, siehe auch DE 34 36 173 A1.

Die mechanische Verbindung zwischen den Gewindespindeln und den Trennmessern kann gemäß den Ansprüchen 11 bis 14 erfolgen.

Als elektrisch leitende Verbindung zu dem beweglichen Kontaktstengel des Kontaktstückes kann nach Anspruch 15 eine Rollenkontaktvorrichtung verwendet werden. Diese besitzt gemäß den kennzeichnenden Merkmalen der Ansprüche 16 und 17 einen mit dem Kontaktstengel verbundenen Innenring und einen mit dem Lagerbock und dem Isoliergehäuse verbundenen Außenring, so daß die axiale Bewegung des Kontaktstengels durch die Rollenkontaktvorrichtung aufgenommen werden kann.

Das Isoliergehäuse ist gemäß kennzeichnenden Merkmalen des Anspruches 18 quadratisch oder rechteckig; in den Ecken befinden sich Augen, an denen der Außenring befestigt werden kann.

Eine weitere vorteilhafte Ausgestaltung der Erfindung kann dahin gehen, daß an insbesondere den vertikal übereinanderliegenden Seitenwänden das Isoliergehäuse Ausbauchungen gemäß den kennzeichnenden Merkmalen der Ansprüche 19 und 20 aufweist, die als vom freien Rand des Isoliergehäuses, mit dem es an der Frontwand befestigt ist, bis etwa hin zum Lagerbock verlaufende Kanäle ausgebildet sind, wobei der Außenring den Kanälen entsprechende Vorsprünge aufweist, die an den Endwänden der Kanäle bzw. an der Stufenfläche des Lagerbockes fixierbar sind.

Die lichte Weite dieser Augen bzw. des nach innen ragenden Bereiches des Lagerbocks ist gemäß kennzeichnenden Merkmalen des Anspruches 21 größer als der Außendurchmesser des Leistungsschalterpols innerhalb des Gehäuses, so daß der Leistungsschalterpol nach Lösen der Verbindungen nach vorn herausgezogen werden kann.

Weitere vorteilhafte Ausgestaltungen und Verbesserungen der Erfindung sind den weiteren Unteransprüchen zu entnehmen.

Anhand der Zeichnung, in der zwei Ausführungsbeispiele der Erfindung dargestellt sind, sollen die Erfindung und weitere vorteilhafte Ausgestaltungen und Verbesserungen der Erfindung näher erläutert und beschrieben werden.

Es zeigen:
- Fig. 1: eine Längsschnittansicht durch eine erste Ausgestaltung eines Isoliergehäuses mit Teilansicht des Schaltfeldes,
- Fig. 2: das Schaltfeld gemäß Fig. 1 in einer Zwischenstellung des Trennschaltermessers,
- Fig. 3: eine Längsschnittansicht durch den hinteren Bereich des Isoliergehäusees gemäß Fig. 1,
- Fig. 4: eine Schnittansicht des Isoliergehäuses gemäß Schnittlinie IV-IV der Fig. 3,
- Fig. 5: eine Längsschnittansicht durch ein Schaltfeld ähnlich dem der Fig. 1, mit einem gegenüber der Fig. 1 modifizierten Isoliergehäuse,
- Fig. 6: eine Schnittansicht gemäß Schnittlinie VI-VI der Fig. 5,
- Fig. 7 und 8: die Trennmesseranordnung mit Gewindespindel in zwei unterschiedlichen Stellungen,
- Fig. 9: eine vergrößerte Schnittansicht der Lagerung einer Gewindespindel innerhalb der Frontwand und
- Fig. 10: eine Aufsicht auf die Antriebskupplung dreier nebeneinander angeordneter Gewindespindeln.

Von dem Schaltschrank des Schaltfeldes 10 ist die Frontwand 11 zu sehen, die senkrecht verläuft und eine Öffnung 12 aufweist, durch die ein Isoliergehäuse 13 hindurchgreift, dessen Stirnfläche bündig mit der Außenfläche der Frontwand 11 verläuft. Auf der Außenseite der Frontwand ist eine Frontplatte 14 befestigt, an der ein Antriebsgehäuse 15, ein Antrieb 16 und weitere Komponenten 17 (hier nicht von Bedeutung) befestigt sind. Innerhalb des Isoliergehäuses 13, welches ähnlich wie das Isoliergehäuse 15 der gleichzeitig eingreichten Patentanmeldung P 44 12 784.7 napfförmig ausgebildet ist, befindet sich ein als Vakuumschalter 18 ausgebildeter Leistungsschalterpol, dessen bewegliches Kontaktstück (nicht dargestellt) mit einem Kontaktstengel 19 verbunden ist, an dem eine Antriebsstange 20 angreift, die mit einem nicht näher gezeigten Schalterantrieb innerhalb des Antriebsgehäuses 15 gekuppelt ist.

An dem Kontaktstengel 19 ist ein Außengewinde 21 vorgesehen, an dem ein Innenring 22 festgeschraubt ist; der Innenring 22 ist von einem Außenring 23 umgeben, wobei zwischen dem Innenring und dem Außenring 22/23 Kontaktrollen 24 in Form von Rollenpaaren angeordnet sind.

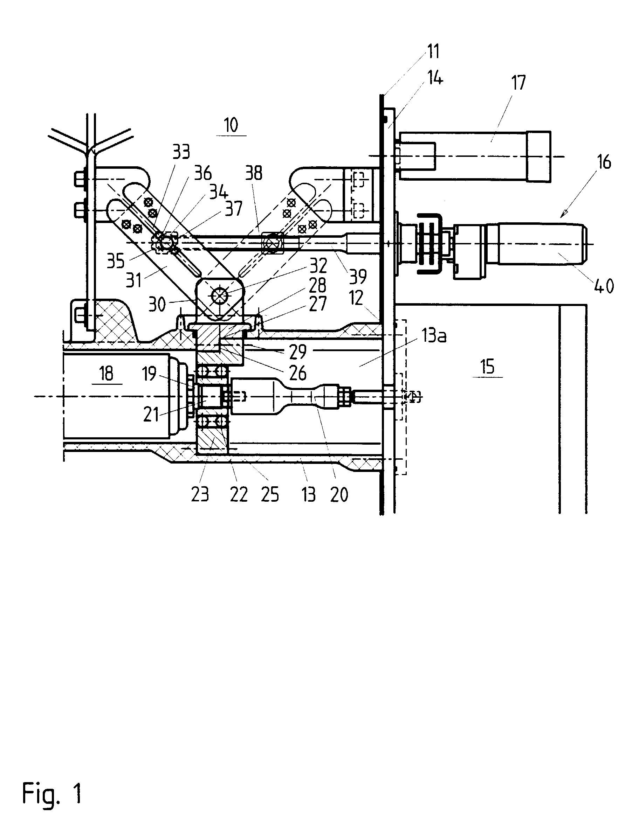

Der Außenring 23 ist gegen an der Innenfläche des quadratisch ausgebildeten Gehäuses 13 im Bereich dessen Ecken angeformte Augen 24 angeschlagen und dort mittels einer Schraubenverbindung 25 fixiert. Auf der in Fig. 1 oben gezeichneten Seite ist der Außenring mit einer Stufenfläche 26 versehen, der eine Stufenfläche 27 an einem Lagerbock 28 entspricht; die Stufenfläche 26 ist an der Stufenfläche 27 des Lagerbocks 28 ebenfalls angeschlagen und mittels einer Schraubenverbindung 29 befestigt. Der Lagerbock 28 endet nach außen in einer radial vorspringenden Gabelanordnung 30, zwischen welchen Gabeln ein Schwenkmesser 31 um eine Lagerachse 32 schwenkbar gelagert ist; die Lagerachse 32 verläuft horizontal und quer zur Mittelachse des Isoliergehäuses 13. Die Schwenkebene des Messers 31 verläuft senkrecht; die Mittelachse des Isoliergehäuses bzw. des Leistungsschalterpols 18 liegt in dieser Schwenkebene.

Bei einem dreipoligen Leistungsschalter sind drei derartige Isoliergehäuse 13 mit Trennmessern 31 nebeneinander angeordnet; die Achsen der Isoliergehäuse liegen in einer horizontalen Ebene, und die Lagerachsen 32 fluchten miteinander.

Das Messer 31 besitzt einen Längsschlitz 33 und im Bereich des Längsschlitzes befindet sich angenähert in der Mitte des Messers eine Schlitzerweiterung 34, in der ein Bolzen 35 gelagert ist, dessen Mittelachse parallel zur Achse 32 verläuft. Der Bolzen ist in einer Gleitmutter 36 gelagert; die Gleitmutter 36 besitzt ein senkrecht zum Bolzen verlaufendes Innengewinde 37, welches auf dem Außengewinde 38 einer Gewindespindel 39 aufgeschraubt ist.

Die Gewindespindel 39 ist aus Kunststoff hergestellt und durchgreift die Frontplatte 14 und ist außerhalb der Frontplatte 14 mit dem einen Elektromotor 40 aufweisenden Antrieb 16 gekuppelt.

Das Messer 31 kann auch als Doppeltrennmesser ausgebildet sein, indem zwei dem Messer 31 entsprechende Messer nebeneinander angeordnet sind; anstatt der Gabelanordnung 30 kann einfach lediglich ein Vorsprung am Lagerbock angeformt sein, der die äußere Kontur der beiden Gabeln der Gabelanordnung 30 besitzt und von den beiden Messern des Doppeltrennmessers beidseitig umfaßt ist.

Wenn ein Doppeltrennmesser vorgesehen ist, dann ist die Gleitmutter ebenfalls zu modifizieren; anstatt eines Bolzens 35 sind an der Gleitmutter beidseitig Zapfen angeformt, die dem Bolzen 35 entsprechen; das Innengewinde zum Aufschrauben auf die Gewindespindel 38 befindet sich dann an der Gleitmutter zwischen den beiden Zapfen. Die Gewindespindel befindet sich dann zwischen den beiden Messern und die beiden vorstehenden Zapfen greifen jeweils in die Erweiterung 34 der beiden Messer ein. Die Gewindespindel kann dabei aus Kunststoff hergestellt sein. Die Zapfen und die Gewindespindel sind einstückig ausgebildet.

Wenn nun der Elektromotor 40 in Betrieb gesetzt wird, dann dreht sich die Gewindespindel 39 um ihre eigene Achse und aufgrund der Gleitmutter 36 schwenkt das Messer 31 aus der in Fig. 1 dick ausgezogenen Stellung in die in Fig. 1 strichliert gezeichnete Stellung, wobei der Bolzen 35 bzw. die Zapfen (nicht dargestellt) und die Gewindemutter 36 eine Kreisbewegung um die Achse 32 vollführen, die dadurch ausgeglichen wird, daß die Gewindespindel 39 innerhalb der Frontplatte 14 um eine Schwenkachse 41 schwenkbar ist, die parallel zur Drehachse 32 verläuft. Da die Gewindespindel 39 mit dem Elektromotor 40 fest verbunden ist, macht der Elektromotor 40 die Schwenkbewegung der Gewindespindel 39 mit.

Zur druckfesten Abdichtung ist an der Außenseite der Frontplatte 14 und der Gewindespindel ein nicht näher dargestellter Faltenbalg vorgesehen, der eine Schwenkbewegung der Gewindespindel 39 gestattet. Es ist selbstverständlich möglich, auch jede andere Anordnung zu verwenden, mit der erreicht wird, daß der Bereich der Schwenkachse 41 und der eine Drehung um ihre Achse gestattende Lagerung abgedichtet ausgebildet ist.

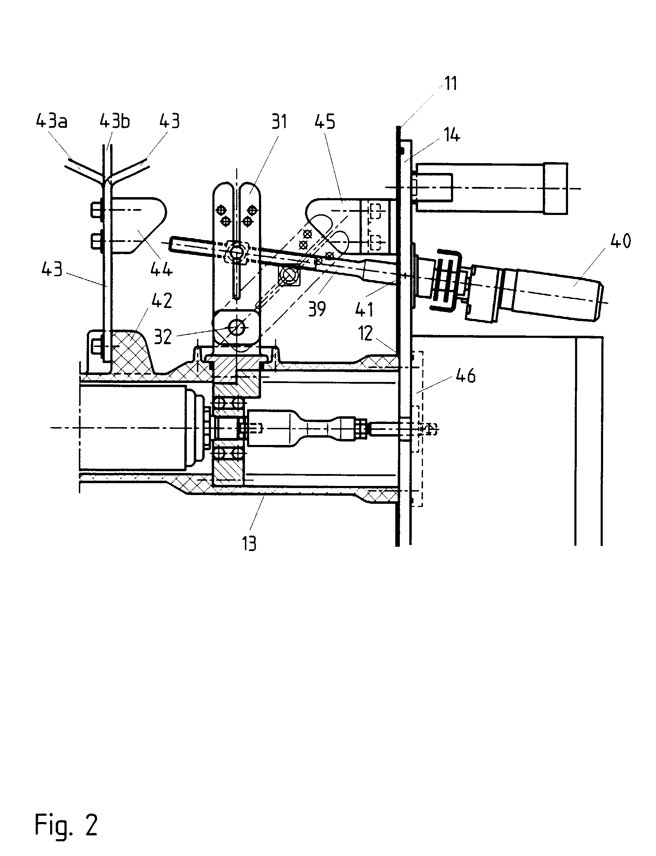

An dem Isoliergehäuse 13 befindet sich radial und senkrecht nach oben vorstehend ein Auge 42; an jedem Auge jedes der Isoliergehäuse ist ein Verbindungsleiter 43, 43a, 43b und 43c, angeschlagen, der wie die Verbindungsleiter 90, 91 und 92 der Fig. 2 der oben erwähnten gleichrangigen Patentanmeldung zu Sammelschienen führt. An jedem der Verbindungsleiter 43a, 43b und 43c ist ein festes Kontaktstück 44 angeformt, welches mit dem Kontaktmesser 31 in Einschaltstellung (siehe Fig. 1, dick ausgezogene Stellung des Messers 32) mit dem Messer in Verbindung gelangt. An der Frontplatte 14 bzw. der Frontwand 11 ist jeweils auch ein festes Kontaktstück 45 befestigt, welches dem festen Kontaktstück 44 entspricht; dieses feste Kontaktstück 45 ist das Erdungskontaktstück. In der in Fig. 1 bzw. 2 dargestellten Stellung befindet sich das Trennmesser 31 in Erdungsstellung.

Nachzutragen ist noch, daß innerhalb des Antriebsgehäuses auf der Außenseite der Frontplatte 14 im Bereich der Öffnung 12 eine Abdichtplatte 46 befestigt ist, damit das Innere des Gehäuses 13 gasdicht verschlossen ist.

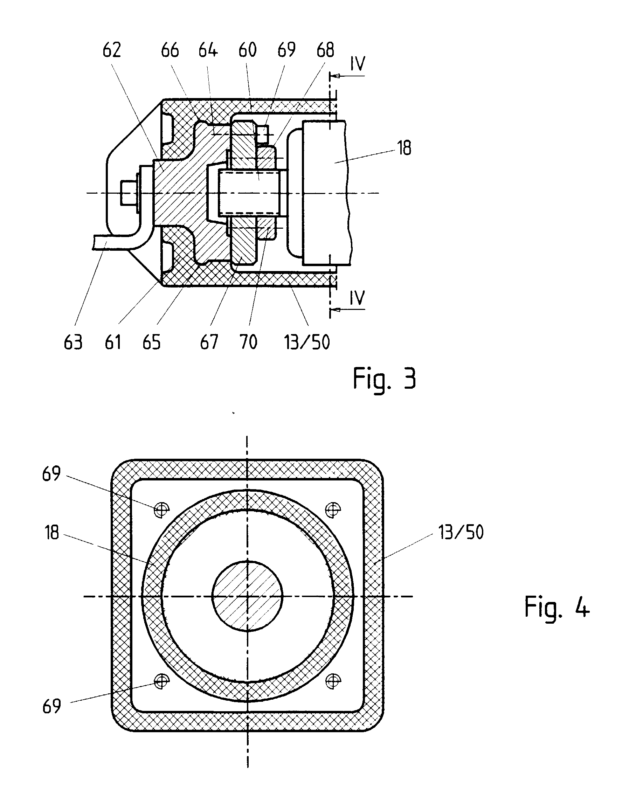

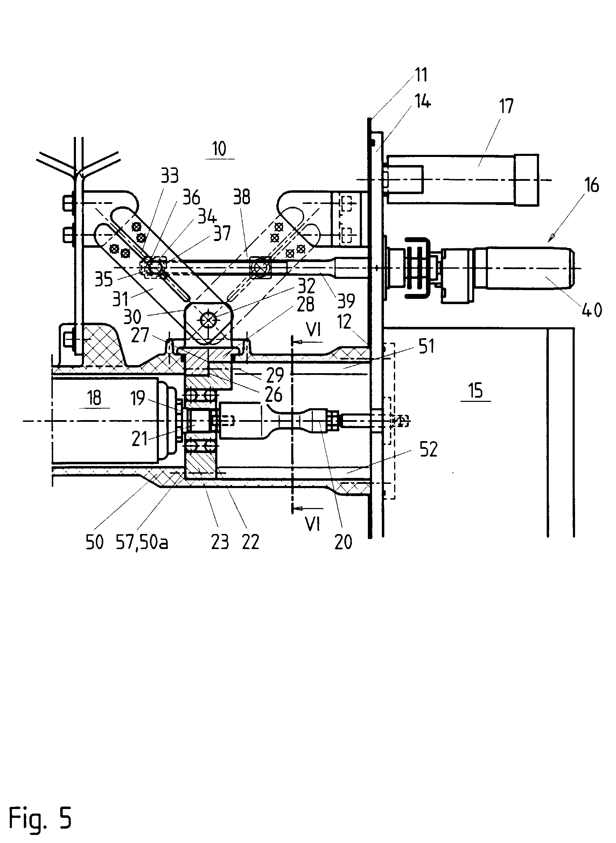

Die Fig. 3 zeigt den hinteren Bereich des Isoliergehäuses 13/50, welcher Bereich in den Fig. 1 und 2 sowie auch in der Fig. 5 (siehe weiter unten) nicht dargestellt ist. Aus diesem hinteren Bereich des Schalterpols 18 ragt Kontaktstengel 60 heraus. Innerhalb des Bodens 61 des Gehäuses 13/50 ist ein Durchgangskontaktstück 62 eingegossen, an dessen Außenseite ein Anschlußleiter 63 angeschlossen und dessen Innenseite als rechteckiger Flansch 64 ausgebildet ist, der mit einer Erweiterung 65 in eine Hinterschneidung 66 im Gehäuse 13/50 eingreift und darin in axialer Richtung fixiert ist. Auf dem Flansch 64 ist ein rechteckiger Befestigungsflansch 67 befestigt, an dem eine auf den Kontaktstengel 60 aufschraubbare Spannmutter 68 gehaltert ist; die Fixierung des Befestigungsflansches 67 am Flansch 64 erfolgt über eine Schraubenverbindung 69; die Fixierung der Spannmutter 68 am Befestigungsflansch 67 ist mittels einer Schraubenverbindung 70 bewerkstelligt.

Aus Fig. 4 sind die Schraubenverbindungen 69 ersichtlich; sie sind seitlich des im Querschnitt kreisförmigen Leistungsschalterpols 18 von vorn, also von seiten der Frontplatte 11/14, zugänglich.

Zur Fixierung wird der Befestigungsflansch 67 an der auf den Kontaktstengel 60 aufgeschraubten Spannmutter 68 mittels der Schraubverbindungen 70 befestigt; dadurch ist der Befestigungsflansch 67 an dem Leistungsschalterpol angebracht. Mittels der Schraubenverbindungen 69 kann der Befestigungsflansch 67 und damit der Leistungsschalterpol 18 an dem Flansch 64 befestigt werden.

Es sei nun Bezug genommen auf die Fig. 5. Das Schaltfeld der Fig. 5 entspricht im wesentlichen mit praktisch allen Details dem Schaltfeld der Fig. 1; unterschiedlich ist die Ausgestaltung des Isoliergehäuses 50. Während das Isoliergehäuse 13 lediglich oben eine als Kanal ausgebildete Ausbauchung 13a aufweist, durch die der Außenring 23, der an seiner oberen Seite eine der Ausbauchung 13a angepaßte Kontur aufweist, hin zur Stufenfläche 27 des Lagerbocks 28 eingeführt werden kann, besitzt das Gehäuse 50 oben und unten je eine Ausbauchung 51 und 52, wobei es im übrigen im wesentlichen einen quadratischen Querschnitt aufweist. Die Ausbauchungen 51 und 52 verlaufen vom vorderen Rand, also von dem freien Rand mit dem das Gehäuse an der Frontwand 11/14 befestigbar ist, bis hin zum Lagerbock, wobei die Stufungsfläche 27 des Lagerbocks die Endwand der Ausbauchung 51 bzw. des durch die Ausbauchung 51 gebildeten Kanals 53 darstellt, wogegen die Ausbauchung 52 bzw. der dadurch gebildete Kanal 54 eine Endwand 57 aufweist. In den Kanälen 53, 54 können daran angepaßte Vorsprünge 55 und 56 am Außrenring 23 gleiten. Dort, wo bei dem Isoliergehäuse 13 der Fig. 1 die Augen 24 sitzen, befindet sich die den Kanal 54 abschließende Endwand 57, gegen die der Vorsprung 56 anschlägt und an der der Vorsprung 56 mittels einer Schraubenverbindung 58 fixierbar ist. Der Vorsprung 55 schlägt mit seiner Stufung 26 an der Stufung 27 des Lagerbocks an und ist dort mittels der Schraubenverbindung 29 (hier wird die gleiche Bezugsziffer verwendet) am Lagerbock befestigt.

Zusätzlich können in den Ecken des rechteckigen Isoliergehäuses die Augen 24 vorgesehen sein, an denen der Außenring ebenfalls befestigt werden kann.

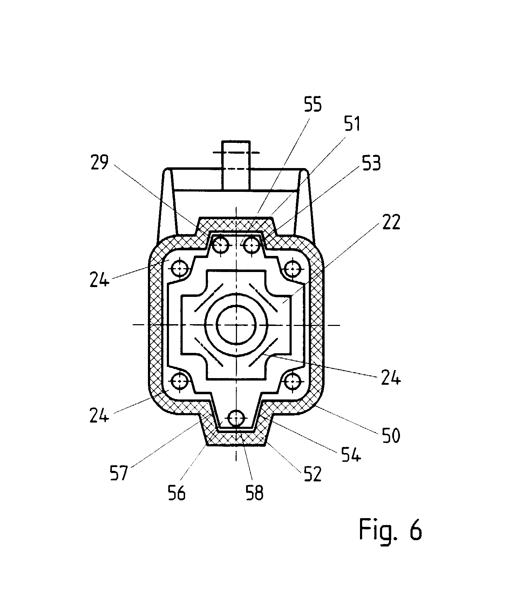

Nachzutragen ist noch, daß, wie aus Fig. 6 ersichtlich ist, der Innenring 22 nicht kreisförmig, sondern sternförmig ausgebildet ist; der Außenring besitzt dann ebenfalls eine daran angepaßte sternartige Form. Die Rollen 24 sind als Walzrollen bei der Ausführung nach Fig. 6 im Viereck angeordnet, welches bezogen auf das Viereck des Isoliergehäuses 50 mit seinen Ecken um 90° verdreht ist. Selbstverständlich können auch Kugellageranordnungen und dgl. verwendet werden. Weiterhin ist nachzutragen, daß das Innere des Isoliergehäuses 13 bzw. 50 mittels einer nicht näher dargestellten Gasleitung mit dem Raum 10 der Schaltkammer verbunden ist; im Antriebsgehäuse 50 befindet sich dabei ein Ventil in dieser Leitung, wie in der älteren Patentanmeldung P 43 42 796.0 schon beschrieben.

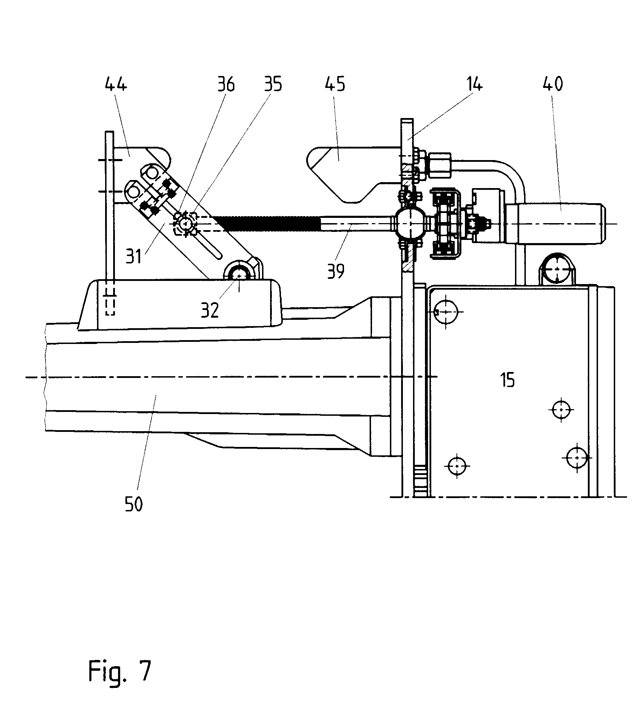

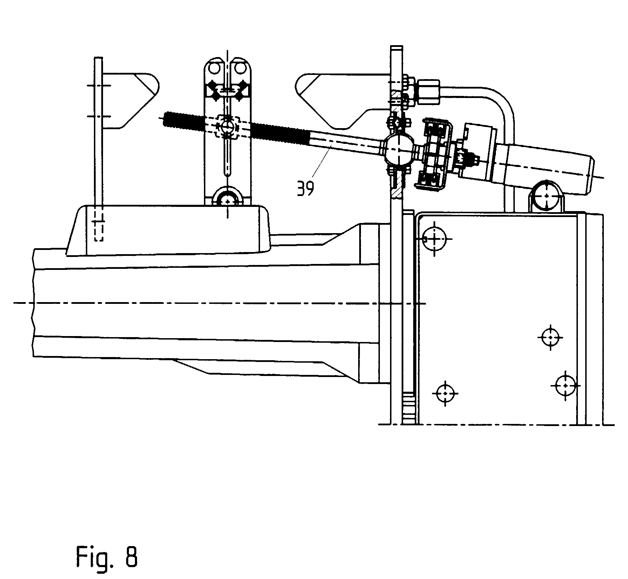

Die Fig. 7 zeigt eine teilweise Ansicht eines Isoliergehäuses mit aufgesetztem Trennmesser. Man erkennt aus den Stellungen der Fig. 7 und 8 die unterschiedliche winkelige Lage der Gewindespindel.

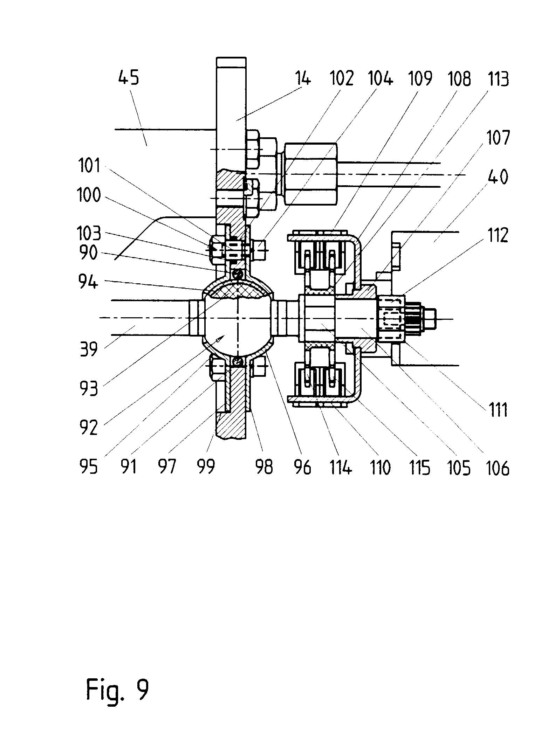

Die Lagerung der Gewindespindel 39 ist aus Fig. 9 näher ersichtlich. Die Frontwand 14 besitzt einen Durchbruch 90, der eine im Querschnitt kreisförmige O-Ringdichtung 91 umgibt. Die Gewindespindel 39 besitzt im Bereich des Durchbruches 91 eine kugelförmige Erweiterung 92, die einen direkt mit der Gewindespindel 39 verbundenen Kugelbereich 93 und einen darauf aufgesetzten Lagerbereich 94 aufweist. Umfaßt wird dieser Lagerbereich 94 von spherischen Halblagerschalen 95 und 96, an denen radiale Flansche 97 und 98 angereifen und zwar am größten Durchmesser der Lagerschalen 95 und 96, von denen der Flansch 97 in einer Vertiefung 99 auf der Innenseite der Frontplatte 14 eingreift, wogegen der Flansch 98 auf der Außenseite der Frontwand 14 anliegt. Die Fixierung der Flansche 97 und 98 erfolgt mittels mehrerer Schrauben-Muttern-Verbindungen 100, deren Schraubenbolzen 101 eine Zylinderform aufweist und den Flansch 97 und eine Bohrung 102 unter Zwischenfügung einer Dichtung 103 durchgreift und auf der Außenseite mittels einer Mutter 104 verschraubt ist. Durch die O-Ringdichtung 91 und durch die Dichtung 103 ist die Durchführung der Gewindespindel 39 nach außen druck- und gasdicht.

Das äußere Ende der Gewindespindel 39 ist mit einem Abschnitt 105 mit einem Sechskantprofil versehen, an das sich ein zylinderförmiger Abschnitt 106 anschließt, der von einer Lagerbuchse 107 umgeben ist, auf der ein U-förmiger Träger 108 gelagert ist, wobei dei Schenkel 109 und 110 zur Frontwand 14 hin weisen. Die Träger 107 werden mittels Kappen 111, die auf die entsprechenden Enden der Gewindespindel 39 aufgeschraubt sind, fixiert. Die Außenkontur der Kappen 111 ist, wie durch 112 angedeutet, eine Sechskantform.

Die Erfindung ist bei einem Leistungsschalterpol beschrieben; bei einer dreiphasigen Anordnung sind drei horizontal nebeneinander liegende Pole vorgesehen, bei denen die beschriebenen Merkmale vorhanden sind.

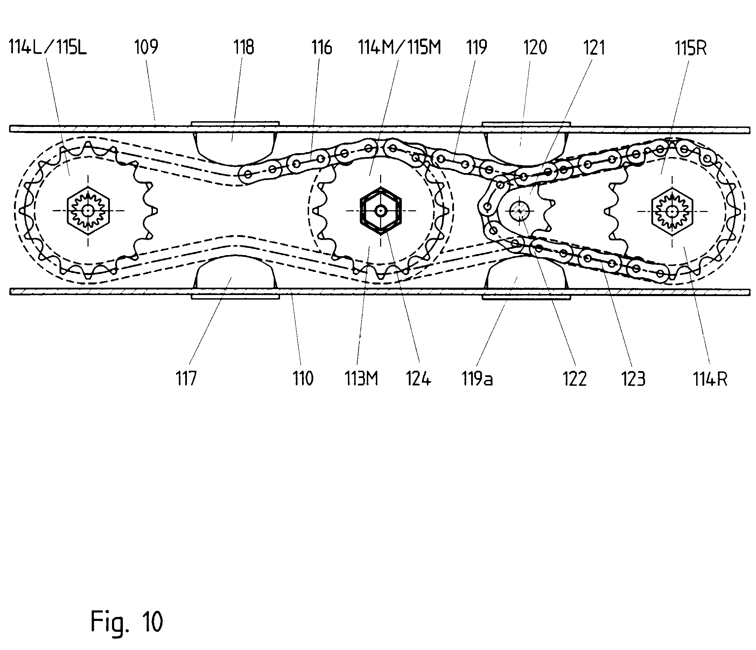

Auf dem Abschnitt 105 jeder Gewindespindel 39 sitzt formschlüssig darauf angebracht eine Doppelzahnradanordnung 113, die zwei Zahnradabschnitte 114 und 115 aufweist. Es sei nun Bezug genommen auf die Fig. 10. Das Zahnrad 114 oder 115, bei der Ausführung nach der Fig. 10 das Zahnrad 114 der Doppelzahnradanordnung 114_{M} der in der Fig. 10 in der Mitte angeordneten Gewindespindel ist mit dem in der Zeichnung Fig. 10 links befindlichen Zahnrad 114_{L} über eine Kette 116 verbunden bzw. gekuppelt, die mittels Kettenspann- bzw. Kettenführungsteilen 117 und 118 geführt bzw. gespannt sind. Eine weitere Kette 119 umschlingt sowohl das Zahnrad 115_{L} (in Fig. 10 nicht dargestellt und von dem Zahnrad 114_{L} verdeckt), das Zahnrad 115_{M} und das entsprechende Zahnrad 115_{R}, wobei zwischen den Zahnrädern 115_{M} und 115_{R} ebenfalls Kettenführungs- und Spannvorrichtungen 119a und 120 vorgesehen sind. Zwischen den Spindeln in der Mitte und rechts befindet sich ein Ritzel 121, welches auf einer Welle 122 an der Frontwand 14 gelagert ist, und das Ritzel 122 ist mit dem Zahnrad 114_{R} mittels einer Kette 123 gekoppelt. Die Welle 122 ist mit dem Antrieb 40 verbunden und treibt über die Ketten 116, 119, 123 damit sowohl die linke, die mittlere und die rechte Gewindespindel, und über einen in Fig. 10 der mittleren Gewindespindel zugeordneten und mit diesem gekoppelten Sechskantanschluß 124 kann die Antriebsvorrichtung manuell betätigt werden. Die Kettenführungs- und Spannvorrichtungen 117 und 118 sowie 119a und 120 sind jeweils an den Schenkeln 109 und 110 fixiert.

Über die Ketten 116, 119 und 123 können alle Gewindespindeln der dreipoligen Schalteinrichtung zur Betätigung der Trennmesser gleichzeitig elektrisch oder manuell betätigt werden.

## Patentansprüche

1. Schaltfeld mit einem innerhalb eines Schaltschrankes angeordneten dreipoligen Leistungsschalter, vorzugsweise einem Vakuumleistungsschalter, dessen Leistungsschalterpole jeweils innerhalb eines an der Frontwand des Schaltschrankes befestigten Isoliergehäuses untergebracht sind, auf dessen Außenfläche ein Lagerbock (28; 30) zur schwenkbaren Lagerung eines Trennschaltermessers (31) angebracht ist, wobei die Schwenkebene des Trennschaltermessers (31) senkrecht bzw. vertikal durch die Mittelachse des Leistungsschalterpols (18) verläuft, dadurch gekennzeichnet, daß parallel zu jedem Isoliergehäuse je eine motorgetriebene Gewindespindel (39) verläuft, auf der eine mit dem Messer (31) gekuppelte Gewindemutter (36) gleitet, und daß die Gewindespindel (39) druckdicht durch die Frontwand (11, 14) hindurchgeführt ist und außerhalb derselben mit einem Antriebsmotor (40) gekuppelt ist, der die Gewindespindel (39) in Drehung versetzt.

2. Schaltfeld nach Anspruch 1, dadurch gekennzeichnet, daß die Gleitmutter (36) bezogen auf die Längsachse des Messers (31) am Messer fixiert ist und daß die Gewindespindel innerhalb der Frontwand (11, 14) wenigstens um eine parallel zur Schwenkachse (32) des Messers (31) und senkrecht zur Gewindespindel (39) verlaufende Achse (41) schwenkbar ist, zum Ausgleich einer bei Betätigung des Messers (31) von der Gleitmutter ausgeführten Kreisbewegung.

3. Schaltfeld nach einem der Ansprüche 1 und 2, dadurch gekennzeichnet, daß die Gewindespindel (39) vorzugsweise über einen an der Außenfläche der Frontwand (11, 14) angeordneten Faltenbalg druckdicht an der Frontwand gelagert ist.

4. Schaltfeld nach Anspruch 2, dadurch gekennzeichnet, daß jede Gewindespindel (39) in dem Bereich, in dem sie die Frontwand (14) durchgreift, eine kugelartige Erweiterung (92) aufweist, die druckdicht in der Frontwand (14) gelagert ist.

5. Schaltfeld nach Anspruch 4, dadurch gekennzeichnet, daß an der Frontwand (14) sphärische Lagerschalen (95, 96) befestigt sind, die die kugelartige Erweiterung (92) umgeben.

6. Schaltfeld nach Anspruch 5, dadurch gekennzeichnet, daß die sphärischen Lagerschalen (95, 96) mit radial vorspringenden Flanschen (97, 98) versehen sind, mittels denen die Lagerschalen (95, 96) an der Frontwand (14) befestigt sind, wobei die Flansche (97, 98) beidseitig zur Frontplatte (14) an dieser befestigt sind.

7. Schaltfeld nach Anspruch 6, dadurch gekennzeichnet, daß zwischen dem Innenrand des Durchbruches (90) in der Frontwand (14), durch den die Gewindespindel (39) hindurchgreift, und den radial vorspringenden Flanschen (97, 98) eine O-Ringdichtung (91) zur Dreh- und Schwenkdichtung eingelegt ist.

8. Schaltfeld nach einem der vorherigen Ansprüche, dadurch gekennzeichnet, daß jede Gewindespindel (39) außerhalb der Frontwand (14) mit einer Doppelzahnradanordnung (113) drehfest verbunden ist, die mittels einer Kettenantriebsanordnung (116, 119, 123) miteinander und mit dem Antriebsmotor (40) gekuppelt sind.

9. Schaltanlage nach Anspruch 8, dadurch gekennzeichnet, daß zwischen den Doppelzahnradanordnungen (113) zweier der drei Gewindespindeln ein Ritzel (121) an der Frontwand (14) gelagert ist, welches mit dem Antriebsmotor (40) drehfest verbunden und mit der Kettenantriebsanordnung (116, 119, 123) gekoppelt ist.

10. Schaltanlage nach Anspruch 9, dadurch gekennzeichnet, daß das Ritzel (121) mittels einer ersten umschlingenden Gliederkette (123) mit einem Zahnrad der Doppelzahnradanordnung (113) einer benachbarten Gewindespindel, vorzugsweise einer äußeren gekoppelt ist, und daß die zusammengehörigen Zahnräder aller Gewindespindeln mittels einer gemeinsam alle umschlingenden Kette (11) gekoppelt sind.

11. Schaltfeld nach einem vorherigen Ansprüche, dadurch gekennzeichnet, daß das Messer (31) eine senkrecht dazu und parallel zur Schwenkachse (32) verlaufende Durchgangsöffnung aufweist, die einen Zapfen (35) aufnimmt, mit dem die Gewindemutter (36) mit dem Messer (31) drehbar gekuppelt ist.

12. Schaltfeld nach Anspruch 11, dadurch gekennzeichnet, daß der Zapfen (35) ein Bolzen ist, an dem die Gewindemutter (36) relativ zu dem Bolzen (35) drehbar gelagert und der am Messer (31) in der Durchgangsöffnung festgelegt ist.

13. Schaltfeld nach einem der Ansprüche 1 bis 10, dadurch gekennzeichnet, daß das Messer (31) ein Doppelmesser mit zwei parallel zueinander angeordneten Messerarmen ist, welches eine senkrecht dazu und parallel zur Schwenkachse (32) verlaufende Durchgangsöffnung aufweist, daß an der Gewindemutter (36) beidseitig Zapfen angeformt sind, die in die Durchgangsöffnung jedes Messerarms zur drehbaren Lagerung der Gewindemutter relativ zu dem Messer (31) eingreifen.

14. Schaltfeld nach Anspruch 13, dadurch gekennzeichnet, daß das Innengewinde der Gewindemutter (36) mittig zwischen den Zapfen angeordnet ist, so daß die Gewindespindel (39) zwischen die Messerarme des Doppelmessers eingreift.

15. Schaltfeld nach einem der vorherigen Ansprüche, bei dem der Lagerbock (27) das Isoliergehäuse (13) radial durchgreift und innerhalb des Isoliergehäuses (13) mit dem beweglichen Kontaktstück des Leistungsschalterpols elektrisch leitend verbunden ist, dadurch gekennzeichnet, daß der das bewegliche Kontaktstück halternde bewegliche Kontaktstengel (19) des Leistungsschalterpols (18) mittels einer Rollenkontaktvorrichtung (22, 23, 24) mit dem Lagerbock elektrisch leitend verbunden ist.

16. Schaltfeld nach Anspruch 15, dadurch gekennzeichnet, daß am Kontaktstengel (19) ein Innenring (22) und an der Innenfläche des Isoliergehäuses sowie am Lagerbock (28) ein Außenring befestigt sind, die Kontaktrollen (24) zwischen sich nehmen, so daß der Innenring (22) mit dem Kontaktstengel (19) gegenüber dem Außenring (23) axial verschiebbar ist.

17. Schaltfeld nach einem der Ansprüche 15 und 16, dadurch gekennzeichnet, daß der Außenring (23) im Bereich des Lagerbocks (28) eine Stufung (26) und der Lagerbock innerhalb des Gehäuses je eine darauf angepaßte Stufung (27) aufweisen, an denen der Außenring am Lagerbock fixierbar ist.

18. Schaltfeld nach einem der Ansprüche 15 bis 17, dadurch gekennzeichnet, daß das Isoliergehäuse (13) im Querschnitt rechteckig oder quadratisch ist und in den Ecken nach innen vorspringende Augen (24) aufweist, gegen die der Außenring (23) von vorn anschlagbar und daran befestigbar ist.

19. Schaltfeld nach einem der Ansprüche 15 bis 17, dadurch gekennzeichnet, daß das Isoliergehäuse (50) an sich gegenüberliegenden Seitenwänden von dem vorderen freien Rand aus, mit dem das Isoliergehäuse an der Frontwand befestigt ist, axial bis etwa zum Lagerbock verlaufende U-förmige Ausbauchungen (51, 52) aufweist, die mit der offenen Seite aufeinanderzuweisen, und daß die Ausbauchungen (51, 52) etwa im Bereich des Lagerbockes durch radiale Endwände abgeschlossen sind, an denen der Außenring (23) befestigbar ist.

20. Schaltfeld nach Anspruch 19, dadurch gekennzeichnet, daß die U-förmigen Ausbauchungen an der vertikal oben liegenden und vertikal unten liegenden Seitenwand angeordnet sind, und daß die Endwand der vertikal oben liegenden Ausbauchung durch die Stufenfläche (27) gebildet ist, so daß der Außenring (23) im Bereich der oberen Ausbauchung am Lagerbock fixierbar ist.

21. Schaltfeld nach einem der Ansprüche 18 bis 20, dadurch gekennzeichnet, daß die durch die Augen (24) und den Lagerbock (28) begrenzte lichte Weite größer ist als der Außendurchmesser des Schalterpols (18), so daß der Schalterpol nach vorn aus dem Isoliergehäuse (13) herausziehbar ist.

22. Schaltfeld nach einem der Ansprüche 15 bis 21, dadurch gekennzeichnet, daß am Boden des Isoliergehäuses (13/50) ein Durchgangskontaktelement (62) eingegossen ist, dessen Innenbereich als Flansch (64) ausgebildet ist, an dem der Leistungsschalterpol mittels eines Befestigungsflansches befestigbar ist.

23. Schaltfeld nach Anspruch 22, dadurch gekennzeichnet, daß der Kontaktstengel (60) des festen Kontaktstückes des Leistungsschalters ein Außengewinde aufweist, an dem mittels einer Gewindemutter ein Befestigungsflansch fixiert ist, der an dem Flansch (64) mittels in den Ecken des Isoliergehäuses außerhalb der lichten Weite des Leistungsschalterpols (18) angeordneter Schraubenverbindungen (69) befestigbar ist.

24. Schaltfeld nach einem der Ansprüche 15 bis 23, dadurch gekennzeichnet, daß die Kontaktrollen Kugeln, Walzen und dgl. sind.

## Claims

1. Switchboard having a three-phase circuit breaker arranged inside a switch cabinet, preferably a vacuum circuit breaker whose circuit breaker poles are each accommodated inside an insulating enclosure which is mounted on the front wall of the switch cabinet and on whose outer surface a bearing block (28; 30) is fitted in order to mount a switch disconnector blade (31) such that it can pivot, the pivoting plane of the switch disconnector blade (31) running at right angles or vertically through the centre axis of the circuit breaker pole (18), characterized in that in each case one motor-driven threaded spindle (39) runs parallel to each insulating enclosure, on which threaded spindle (39) a threaded nut (36) which is coupled to the blade (31) slides, and in that the threaded spindle (39) is passed through the front wall (11, 14) in a pressuretight manner and is coupled outside the front wall (11, 14) to a drive motor (40) which causes the threaded spindle (39) to rotate.

2. Switchboard according to Claim 1, characterized in that the sliding nut (36) is fixed on the blade (31) with respect to the longitudinal axis of said blade (31), and in that the threaded spindle can pivot inside the front wall (11, 14) at least about an axis (41) which runs parallel to the pivoting axis (32) of the blade (31) and at right angles to the threaded spindle (39), in order to compensate for any circular movements carried out by the sliding nut during operation of the blade (31).

3. Switchboard according to one of Claims 1 and 2, characterized in that the threaded spindle (39) is preferably mounted in a pressuretight manner on the front wall via a folding bellows which is arranged on the outer surface of the front wall (11, 14).

4. Switchboard according to Claim 2, characterized in that, in the area in which it passes through the front wall (14), each threaded spindle (39) has a spherical extension (92) which is mounted in a pressuretight manner in the front wall (14).

5. Switchboard according to Claim 4, characterized in that spherical bearing shells (95, 96), which surround the spherical extension (92), are mounted on the front wall (14).

6. Switchboard according to Claim 5, characterized in that the spherical bearing shells (95, 96) are provided with radially projecting flanges (97, 98) by means of which the bearing shells (95, 96) are mounted on the front wall (14), the flanges (97, 98) being mounted on the front panel (14), on both sides of it.

7. Switchboard according to Claim 6, characterized in that an O-ring seal (91) for rotational and pivoting sealing is inserted between the inner edge of the aperture (90) in the front wall (14) through which the threaded spindle (39) passes and the radially projecting flanges (97, 98).

8. Switchboard according to one of the preceding claims, characterized in that each threaded spindle (39) is connected in a rotationally fixed manner outside the front wall (14) to a double gearwheel arrangement (113), which arrangements (113) are coupled to one another and to the drive motor (40) by means of a chain drive arrangement (116, 119, 123).

9. Switchgear assembly according to Claim 8, characterized in that a pinion (121) is mounted on the front wall (14) between the double gearwheel arrangements (113) of two of the three threaded spindles, is connected in a rotationally fixed manner to the drive motor (40), and is coupled to the chain drive arrangement (116, 119, 123).

10. Switchgear assembly according to Claim 9, characterized in that the pinion (121) is coupled by means of a first open-link chain (123), which is looped around it, to a gearwheel of the double gearwheel arrangement (113) of an adjacent threaded spindle, preferably an outer threaded spindle, and in that the associated gearwheels of all the threaded spindles are coupled by means of a chain (11) which is looped around them all jointly.

11. Switchboard according to one of the preceding claims, characterized in that the blade (31) has an aperture which runs at right angles to it and parallel to the pivoting axis (32) and holds a pin (35) by means of which the threaded nut (36) is coupled to the blade (31) such that it can rotate.

12. Switchboard according to Claim 11, characterized in that the pin (35) is a bolt on which the threaded nut (36) is mounted such that it can rotate relative to the bolt (35), and which is fixed on the blade (31) in the aperture.

13. Switchboard according to one of Claims 1 to 10, characterized in that the blade (31) is a double blade having two blade arms which are arranged parallel to one another and has an aperture which runs at right angles to it and parallel to the pivoting axis (32), and in that pins are integrally formed on both sides on the threaded nut (36) and engage in the aperture in each blade arm in order to mount the threaded nut so that it can rotate relative to the blade (31).

14. Switchboard according to Claim 13, characterized in that the internal thread of the threaded nut (36) is arranged centrally between the pins so that the threaded spindle (39) engages between the blade arms of the double blade.

15. Switchboard according to one of the preceding claims, in which the bearing block (27) passes radially through the insulating enclosure (13) and is electrically conductively connected inside the insulating enclosure (13) to the moving contact element of the circuit breaker pole, characterized in that the moving contact arm (19) (which holds the moving contact element) of the circuit breaker pole (18) is electrically conductively connected to the bearing block by means of a roller contact apparatus (22, 23, 24).

16. Switchboard according to Claim 15, characterized in that an inner ring (22) is mounted on the contact arm (19) and an outer ring is mounted on the inner surface of the insulating enclosure as well as on the bearing block (28), which rings hold the contact rollers (24) between them so that the inner ring (22) can be moved axially by means of the contact arm (19) with respect to the outer ring (23).

17. Switchboard according to one of Claims 15 and 16, characterized in that the outer ring (23) has a step (26) in the region of the bearing block (28) and the bearing block has in each case one step (27), matched to this step (26), within the enclosure, on which steps the outer ring of the bearing block can be fixed.

18. Switchboard according to one of Claims 15 to 17, characterized in that the insulating enclosure (13) has a rectangular or square cross-section and has inwardly projecting eyes (24) in the corners, against which eyes (24) the outer ring (23) can strike from the front and can be mounted on.

19. Switchboard according to one of Claims 15 to 17, characterized in that the insulating enclosure (50) has, on mutually opposite side walls from the front free edge by means of which the insulating enclosure is mounted on the front wall, U-shaped bulges (51, 52) which run axially roughly as far as the bearing block and whose open sides point towards one another, and in that the bulges (51, 52) are closed approximately in the area of the bearing block by radial end walls to which the outer ring (23) can be attached.

20. Switchboard according to Claim 19, characterized in that the U-shaped bulges are arranged on the side wall located vertically at the top and the side wall located vertically at the bottom, and in that the end wall of the bulge which is located vertically at the top is formed by the step surface (27) so that the outer ring (23) can be fixed on the bearing block in the area of the upper bulge.

21. Switchboard according to one of Claims 18 to 20, characterized in that the unobstructed width which is bounded by the eyes (24) and the bearing block (28) is larger than the external diameter of the switch pole (18), so that the switch pole can be withdrawn from the insulating enclosure (13) at the front.

22. Switchboard according to one of Claims 15 to 21, characterized in that a through-contact element (62) is cast in on the base of the insulating enclosure (13/50), and its inner area is designed as a flange (64) to which the circuit breaker pole can be attached by means of a mounting flange.

23. Switchboard according to Claim 22, characterized in that the contact arm (60) of the fixed contact element of the circuit breaker has an external thread on which a mounting flange is fixed by means of a threaded nut, which mounting flange can be attached to the flange (64) by means of screw connections (69) which are arranged in the corners of the insulating enclosure, outside the unobstructed width of the circuit breaker pole (18).

24. Switchboard according to one of Claims 15 to 23, characterized in that the contact rollers, are spheres, rolls or the like.

## Revendications

1. Tableau de distribution avec un commutateur de puissance tripolaire disposé à l'intérieur d'une armoire de distribution, de préférence avec un commutateur de puissance sous vide, dont les pôles de commutateur sont logés chacun dans un boîtier isolant fixé à la paroi avant de l'armoire de distribution et sur la face extérieure duquel est aménagé un palier support (28; 30) pour le montage pivotant d'un couteau de sectionneur (31), le plan de pivotement du couteau de sectionneur (31) s'étendant perpendiculairement ou verticalement par rapport à l'axe médian du pôle de commutateur de puissance (18), caractérisé par le fait qu'une broche filetée (39) entraînée par moteur, sur laquelle coulisse un écrou (36) couplé au couteau (31), s'étend parallèlement à chaque boîtier isolant et par le fait que la broche filetée (39) traverse de manière étanche à la pression la paroi frontale (11, 14) et est couplée à l'extérieur de celle-ci à un moteur d'entraînement (40) qui entraîne ladite broche filetée (39) en rotation.

2. Tableau de distribution selon la revendication 1, caractérisé par le fait que l'écrou coulissant (36) est lié au couteau (31) de manière fixe par rapport à l'axe longitudinal de celui-ci et par le fait que la broche filetée, à l'intérieur de la paroi frontale (11, 14), peut pivoter autour d'au moins un axe (41) qui est parallèle à l'axe de pivotement du couteau (31) et perpendiculaire à la broche filetée (39) aux fins de compenser un mouvement circulaire exécuté par l'écrou coulissant lors de l'actionnement du couteau (31).

3. Tableau de distribution selon une des revendications 1 et 2, caractérisé par le fait que la broche filetée (39) est montée étanche à la pression sur la paroi frontale (11, 14), par l'intermédiaire d'un soufflet placé sur la face extérieure de la paroi frontale.

4. Tableau de distribution selon la revendication 2, caractérisé par le fait que chaque broche filetée (39), dans la région dans laquelle elle traverse la paroi frontale (14), présente un élargissement (92) en forme de sphère qui est monté étanche à la pression dans la paroi frontale (14).

5. Tableau de distribution selon la revendication 4, caractérisé par le fait que des coussinets (95, 96) sphériques qui entourent l'élargissement (32) en forme de sphère sont fixés à la paroi frontale (14).

6. Tableau de distribution selon la revendication 5, caractérisé par le fait que les coussinets sphériques (95, 96) sont pourvus de brides (97, 98) qui font saillie radialement et à l'aide desquelles les coussinets (95, 96) sont fixés à la paroi frontale (14), les brides (97, 98) étant fixées au panneau frontal (14) de chaque côté de celui-ci.

7. Tableau de distribution selon la revendication 6, caractérisé par le fait qu'un joint torique (91) assurant l'étanchéité en rotation et en pivotement est placé entre le bord intérieur de l'ouverture (90) dans la paroi frontale (14) par laquelle passe la broche filetée (39) et les brides (97, 98) faisant saillie radialement.

8. Tableau de distribution selon une des revendications précédentes, caractérisé par le fait que chaque broche filetée (39), à l'extérieur de la paroi frontale (14), est solidaire en rotation d'un système à deux roues dentées (113) liées l'une à l'autre et au moteur d'entraînement (40) par un système de chaînes d'entraînement (116, 119, 123).

9. Tableau de distribution selon la revendication 8, caractérisé par le fait qu'un pignon (121) est monté sur la paroi frontale (14) entre les systèmes à deux roues dentées (113) de deux des trois broches filetées, lequel pignon est solidaire en rotation du moteur d'entraînement (40) et est couplé au système de chaînes d'entraînement (116, 119, 123).

10. Tableau de distribution selon la revendication 9, caractérisé par le fait que le pignon (121) est couplé au moyen d'une première chaîne à maillons (123) à une roue dentée du système à deux roues dentées (113) d'une broche filetée voisine, de préférence d'une broche filetée extérieure, et par le fait que les roues dentées correspondantes de toutes les broches filetées sont couplées au moyen d'une chaîne (11) commune entourant toutes les roues dentées.

11. Tableau de distribution selon une des revendications précédentes caractérisé par le fait que le couteau (31) présente une ouverture de passage perpendiculaire audit couteau et parallèle à l'axe de pivotement (32), qui reçoit un bout d'axe (35) par l'intermédiaire duquel l'écrou (36) est couplé en rotation au couteau (31).

12. Tableau de distribution selon la revendication 11, caractérisé par le fait que le bout d'axe (35) est une tige sur laquelle l'écrou (36) est monté avec possibilité de rotation par rapport à la tige (35) et qui est fixée au couteau (31), dans l'ouverture de passage.

13. Tableau de distribution selon une des revendications 1 à 10, caractérisé par le fait que le couteau (31) est un couteau double avec deux bras de couteau mutuellement parallèles, qui présente une ouverture de passage perpendiculaire, parallèle à l'axe de pivotement (32), par le fait que des bouts d'axes sont formés sur l'écrou (36), de chaque côté de celui-ci, lesquels bouts d'axes pénètrent dans l'ouverture de passage de chacun des bras de couteau aux fins de supporter l'écrou avec possibilité de pivotement par rapport au couteau (31).

14. Tableau de distribution selon la revendication 13, caractérisé par le fait que le filetage intérieur de l'écrou (36) est disposé de manière centrée entre les bouts d'axes, de sorte que la broche filetée (39) s'engage entre les bras de couteau du couteau double.

15. Tableau de distribution selon une des revendications précédentes, dans lequel le palier support (27) traverse radialement le boîtier isolant (13) et, à l'intérieur du boîtier isolant (13), est lié de manière électroconductrice à la pièce de contact mobile du pôle de commutateur de puissance, caractérisé par le fait que la tige de contact (19) mobile du pôle de commutateur de puissance (18) qui porte la pièce de contact mobile est liée de manière électroconductrice au palier support par un dispositif de contact à galets (22, 23, 24).

16. Tableau de distribution selon la revendication 15, caractérisé par le fait qu'une bague intérieure (22) est fixée à la tige de contact (19) et une bague extérieure est fixée à la surface intérieure du boîtier isolant et au palier support (28), lesquelles bagues reçoivent entre elles les galets de contact (24) de telle sorte que la bague intérieure (22) peut coulisser axialement avec la tige de contact (19) par rapport à la bague extérieure (23).

17. Tableau de distribution selon une des revendications 15 et 16, caractérisé par le fait que la bague extérieure (23) présente un gradin (26) dans la région du palier support (28) et que le palier support à l'intérieur du boîtier présente un gradin (27) adapté au premier par lequel la bague extérieure peut être fixée au palier support.

18. Tableau de distribution selon une des revendications 15 à 17, caractérisé par le fait que le boîtier isolant (13) a une section transversale rectangulaire ou carrée et présente dans les angles des bossages (24) formant saillie vers l'intérieur sur lesquels la bague extérieure (23) peut être appliquée et fixée par le devant.

19. Tableau de distribution selon une des revendications 15 à 17, caractérisé par le fait que le boîtier isolant (50) sur des parois latérales en vis-à-vis, à partir du bord libre antérieur par lequel le boîtier isolant est fixé à la paroi frontale, présente des renflements (51, 52) en U qui s'étendent sensiblement jusqu'au palier support et dont les côtés ouverts sont tournés l'un vers l'autre et par le fait que les renflements (51, 52), sensiblement dans la région du palier support, sont fermés par des parois terminales radiales auxquelles la bague extérieure (23) peut être fixée.

20. Tableau de distribution selon la revendication 19, caractérisé par le fait que les renflements en forme de U sont disposés dans la paroi latérale située verticalement en haut et dans la paroi latérale située verticalement en bas et par le fait que la paroi terminale du renflement située verticalement en haut est formée par la surface de gradin (27), de sorte que la bague extérieure (23) peut être fixée au palier support dans la région du renflement supérieur.

21. Tableau de distribution selon une des revendications 18 à 20, caractérisé par le fait que la section libre délimitée par les bossages (24) et le palier support (28) est supérieure au diamètre extérieur du pôle de commutateur (18), de sorte que ledit pôle de commutateur peut être extrait par le devant du boîtier isolant (13).

22. Tableau de distribution selon une des revendications 15 à 21, caractérisé par le fait qu'un élément de contact traversant (62) est noyé dans le boîtier isolant (13/50), élément dont la partie intérieure est conformée en bride (64) à laquelle le pôle de commutateur de puissance peut être fixé à l'aide d'une bride de fixation.

23. Tableau de distribution selon la revendication 22, caractérisé par le fait que la tige de contact (60) de la pièce de contact fixe du commutateur de puissance présente un filetage extérieur sur lequel une patte de fixation est fixée par l'intermédiaire d'un écrou, laquelle patte peut être fixée à la bride (64) par des liaisons à vis (69) disposées dans les angles du boîtier isolant, en dehors de la section libre du pôle de commutateur de puissance (18).

24. Tableau de distribution selon une des revendications 15 à 23, caractérisé par le fait que les galets de contact sont des billes, des rouleaux ou similaires.
